(19) Europäisches Patentamt
European Patent Office
Office européen des brevets

(11) **EP 1 738 591 B1**

(12) **EUROPEAN PATENT SPECIFICATION**

(45) Date of publication and mention
of the grant of the patent:
**25.01.2012 Bulletin 2012/04**

(51) Int Cl.:
***H04W 16/00*** *(2009.01)*     *H04W 16/24* *(2009.01)*

(21) Application number: **05739964.4**

(86) International application number:
**PCT/KR2005/001134**

(22) Date of filing: **20.04.2005**

(87) International publication number:
**WO 2005/101987 (03.11.2005 Gazette 2005/44)**

(54) **METHOD OF ALLOCATING SUBCARRIERS IN ORTHOGONAL FREQUENCY DIVISION MULTIPLEXING (OFDM) CELLULAR SYSTEM**

VERFAHREN ZUR ZUTEILUNG VON UNTERTRÄGERN IM ORTHOGONALFREQUENZTEILUNGSMULTIPLEXEN (OFDM) ZELLULARSYSTEM

PROCEDE D'ATTRIBUTION DE SOUS-PORTEUSES DANS UN SYSTEME CELLULAIRE DE MULTIPLEXAGE EN FREQUENCE ORTHOGONALE (OFDM)

(84) Designated Contracting States:
**AT BE BG CH CY CZ DE DK EE ES FI FR GB GR HU IE IS IT LI LT LU MC NL PL PT RO SE SI SK TR**

(30) Priority: **22.04.2004 KR 2004027804**

(43) Date of publication of application:
**03.01.2007 Bulletin 2007/01**

(73) Proprietor: **LG Electronics Inc.**
**Seoul 150-721 (KR)**

(72) Inventors:
• **AHN, Joon Kui,**
**108-1505 Gwanak Hyundai Apt.**
**Seoul 156-781 (KR)**

• **ROH, Dong Wook,**
**103-1602 Sillim Woobang APT.**
**Seoul 151-870 (KR)**

(74) Representative: **Urner, Peter et al**
**ter Meer Steinmeister & Partner GbR**
**Mauerkircherstrasse 45**
**D-81679 München (DE)**

(56) References cited:
**EP-A1- 1 178 641      WO-A1-95/25406**
**WO-A1-03/045081      WO-A2-02/49385**

• **KATZELA I. ET AL.: 'Channel Assignment Schemes for Cellular Mobile Telecommunication Systems: A Comprehensive Survey' IEEE PERSONAL COMMUNICATIONS vol. 3, no. 3, June 1996, pages 10 - 31**

**Description**

**Technical Field**

The present invention relates to a method of allocating subcarriers, and more particularly, to a method of allocating subcarriers in Orthogonal Frequency Division Multiplexing (OFDM) cellular system. Although the present invention is suitable for a wide scope of applications, it is particularly suitable for reducing inter-cell interferences by efficiently allocating subcarriers of each cell to user equipments.

**Background Art**

In the past years, the field of mobile communication system has seen great improvements. It seems not too long ago when analog system such as Advanced Mobile Phone System (AMP) was the standard. Since then, we have seen great developments in the mobile telecommunication standard technology including the latest Wideband Code Division Multiple Access (WCDMA).

In such a mobile telecommunication environment, multiplexing technique is widely used to utilize limited wireless communication resources available to subscribers. Multiplexing technique sends two or more signals or streams of information on a carrier at the same time in the form of a single signal and then recovers the separate signals at the receiving end. For example, in AMPS, signals are commonly multiplexed using frequency-division multiplexing (FDM), in which the carrier bandwidth is divided into sub-channels of different frequency widths, each carrying a signal at the same time in parallel. In GSM, signals are commonly multiplexed using time-division multiplexing (TDM), in which the multiple signals are carried over the same channel in alternating time slots.

In the first generation of mobile communication where AMPS was the standard, FDM was used in the analog transmission. In the second generation mobile communication, IS-95 became one of the standard by which digital transmission was made using code division multiplexing (CDM). Similarly, in the standard of the third generation mobile communication, namely cdma 2000 and wideband code division multiplexing access (WCDMA), code division multiplexing is also used.

As the demand for multimedia data in the mobile communication increases, so has the demand to develop for more effective and efficient ways to transmit a large amount of data. As one of the ways to accommodate the growing demand for high speed data transmission, OFDM has been introduced. OFDM is a method of digital modulation in which a signal is split into several narrowband channels at different frequencies. OFDM has been used in European digital audio broadcast services since 1996.

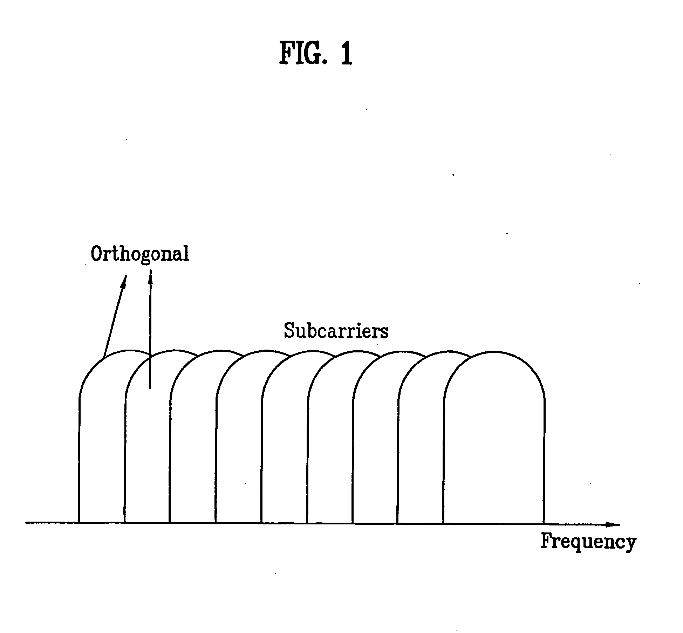

More specifically, OFDM is a method employing a modified multicarrier approach which uses a large number of subcarriers, and the subcarriers have orthogonal relationships as shown in Figure 1. Here, the spectrums of each subcarrier may overlap each other. Because in OFDM, multiplexing can be performed using more number of carriers than used in FDM, the efficiency in frequency usage is high. The coded data, modified in orthogonal/parallel form, is assigned to each carrier and is digitized. Furthermore, the transmission speed can be increased by increasing the number of carriers per bandwidth.

Usually, the mobile communication system has a cell structure in order to promote efficient communication system. A cell structure allows for a more efficient use of a frequency by dividing a large geographical area into smaller areas - called cells. A cell is a geographical area covered by a mobile communication transmitter. Located inside each cell is a base station which makes possible communication between subscribers. Furthermore, several coordinated cell sites are called a cell system. A subscriber is given access to the cell system, essentially local, which enables the subscriber to use the mobile communication system. In fact, when the subscriber travels outside the local cell system, the subscriber's service is transferred to a neighboring cell system. In short, the cell systems allow the subscriber to effectively use the mobile communication system.

A mobile communication system is comprised of a multi-cell environment. However, a single cell environment has been the main stage for OFDM system. In order to incorporate OFDM in a multi-cell system of a mobile communication system, problems such as inter-cell interference has to be resolved. To overcome such problems, the present invention attempts to apply OFDM in a multi-cell environment. In particular, the present invention attempts to reduce inter-cell interference in a multi-directional link by introducing a method of effectively utilizing subcarriers.

WO 03/045081 A1 discloses a method and a system for reducing multi frequency signal interference. To this, an available frequency spectrum is divided into a plurality of channels, a first wireless coverage unit is then segregated into a first number of geographical segments and second number of channel blocks, and each channel block is assigned to at least one of the segregated geographical segments with predetermined priorities. The above steps are repeated for each neighboring area of the first coverage unit.

WO 02/049385 A2 describes a method and an apparatus for allocating subcarriers in an orthogonal frequency division multiple access (OFDMA) system.

EP 1 178 641 A1 relates to a cellular communication system for wireless telecommunication on the basis of an OFDM scheme, comprising a plurality of base stations B, whereby at least one base station B is allocated to each cell C of the communication system and whereby information communicated from said base stations comprises data parts and pilot parts, and further relates to a method for operating such a cellular communication system. The invention of EP 1 178 641 A1 is characterized in that the frequency reuse factor of the data parts is different from a frequency reuse factor of the pilot parts.

**Disclosure of Invention**

Accordingly, the present invention is directed to a method of allocating subcarriers in Orthogonal Frequency Division Multiplexing (OFDM) cellular system that substantially obviates one or more problems due to limitations and disadvantages of the related art.

An object of the present invention is to provide a method for efficiently allocating subcarriers of the system.

Another object of the present invention is to provide a method for reducing inter-cell interferences in subcarrier transmission.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

Objects of the present invention are achevied by subject matter of the indepedent claim.

According to an embodiment of the present invention, a method for effectively allocating a plurality of subcarriers of a mobile communication system in a plurality of cells using OFDM. More specifically, the method comprises allocating the subcarriers of the system to at least one subcarrier group for each cell and assigning priorities to the subcarrier groups in each cell. The method further comprises allocating independently in each cell the subcarrier groups in an order to minimize inter-cell interferences of each cell with at least one neighboring cell.

In another aspect of the present invention, a method of allocating a plurality of subcarriers of a mobile communication system in a plurality of cells using OFDM when employing an omni-directional antenna is introduced. The method comprises allocating the subcarriers of the system to at least one of seven subcarrier groups for each cell and assigning priorities to the subcarrier groups in each cell. The method further comprises allocating independently in each cell the subcarrier groups in an order to minimize inter-cell interferences of each cell with at least one neighboring cell.

In another aspect of the present invention, a method of allocating a plurality of subcarriers of a mobile communication system in a plurality of cells using OFDM having 60° and 120° sectors is presented. The method comprises allocating the subcarriers of the system to at least two groups of subcarriers for each cell and assigning priorities to the subcarrier groups in each cell. Furthermore, the method comprises allocating independently in each cell the subcarrier groups in an order to minimize inter-cell interferences of each cell with at least one neighboring cell.

In another aspect of the present invention, a method of allocating a plurality of subcarriers of a mobile communication system in a plurality of cells using OFDM is introduced. The method comprises determining a total number of subcarriers needed in each cell for allocation to each user equipment and determining a required number of groups of subcarriers for each cell based on the determined total number of subcarriers. The method further comprises allocating the subcarriers of the system to at least one subcarrier group for each cell and assigning priorities to the subcarrier groups in each cell. In addition, the method comprises allocating independently in each cell the subcarrier groups in an order to minimize inter-cell interferences of each cell with at least one neighboring cell.

It is to be understood that both the foregoing general description and the following detailed description of the present invention are exemplary and explanatory and are intended to provide further explanation of the invention as claimed.

**Brief Description of Drawings**

The accompanying drawings, which are included to provide a further understanding of the invention and are incorporated in and constitute a part of this application, illustrate embodiment(s) of the invention and together with the description serve to explain the principle of the invention. In the drawings;

FIG. 1 illustrates subcarriers in an Orthogonal Frequency Division Multiplexing (OFDM) system;

FIG. 2 illustrates a multi-cell structure in a mobile communication system;

FIG. 3 illustrates interferences from surrounding cells affecting a center cell;

FIG. 4 illustrates the directions of transmission of an omni-directional antenna, 120° directional antenna, and 60° directional antenna environment;

FIG. 5A illustrates neighboring sectors of different cells causing interferences to a specific sector in a 120° directional antenna environment;

FIG. 5B illustrates neighboring sectors of different cells causing strongest interferences to a specific sector in a 120° directional antenna environment;

FIG. 6A illustrates neighboring sectors of different cells causing interferences to a specific sector in a 60° directional antenna environment;

FIG. 6B illustrates a neighboring sector of a different cell causing strongest interference to a specific sector in a 60° directional antenna environment;

FIG. 7A illustrates cells having priority assigned subcarrier subsets arranged in order in an omni-directional antenna environment;

FIG. 7B illustrates cells having priority assigned subcarrier subsets arranged in such a manner to reduce overlapping of priorities at the same subcarrier subset in an omni-directional antenna environment;

FIG. 7C illustrates cells having priority assigned subcarrier subsets using 1/7 subcarrier capacity in an omni-directional antenna environment.

FIG. 7D illustrates cells having priority assigned subcarrier subsets using 2/7 subcarrier capacity in an omni-directional antenna environment.

FIG. 8 illustrates cells having priority assigned subcarrier subsets arranged in such a manner to reduce overlapping of priorities at the same subcarrier subset in a 120° directional antenna environment; and

FIG. 9 illustrates cells having priority assigned subcarrier subsets arranged in such a manner to reduce overlapping of priorities at the same subcarrier subset in a 60° directional antenna environment.

**Best Mode for Carrying Out the Invention**

Reference will now be made in detail to the preferred embodiments of the present invention, examples of which are illustrated in the accompanying drawings. Wherever possible, the same reference numbers will be used throughout the drawings to refer to the same or like parts.

In Orthogonal Frequency Division Multiplexing (OFDM) systems, the data are modulated on multiple subcarrier frequencies rather than a single carrier. Furthermore, it is an effective to utilize all subcarriers to increase the transmission rate in the OFDM system.

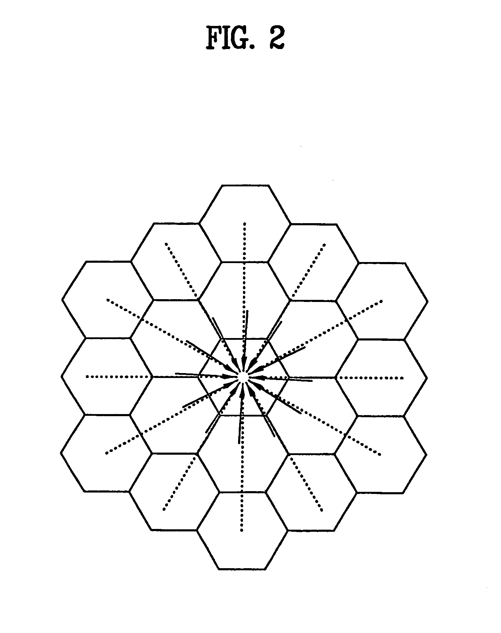

In a multi-cell structure of OFDM, each cell causes interferences that affect other cells. Figure 2 illustrates this point where the cell in the center of the structure receives interferences from surrounding cells. The cell in the center of the structure, also referred to as target cell, of Figure 2 is surrounded by a group of six neighboring cells, called a first ring. In addition, a group of twelve cells enclosing the first ring is called a second ring. The effect of interference caused by the first ring on the target cell is relatively much greater than that of the second ring. The strength of interference signals is reduced proportionally to the multiplier of the distance.

That is, in Equation 1, the received power reduction of the signal from the transmitter can be mathematically provided.

$$P_{RX} = \propto \frac{P_{TX}}{d^n}$$

In Equation 1, $P_{RX}$ represents receiving power and $P_{TX}$ represents transmitting power. Furthermore, d is the distance between the transmitter end and the receiver end, and n usually has a value of 3 or 4 although the value can vary depending on the channel type.

As indicated in the equation, the interference strength from other cells can change greatly based on the distance between cells. For example, in Equation 2, the values of P remain constant, n is 4, and the d represents distance from the center of a cell to the center of another cell. The strength of interference signals from the cells of the first ring to the center cell can be described using the following equation.

[Equation 2]

$$P_{Ring1} = \propto \frac{P}{d^4}$$

Similarly, the strength of interference signals from the cells of the second ring to the center or target cell can be described using the following equation.

[Equation 3]

$$P_{Ring2} \propto \frac{P}{(2d)^4} = \frac{1}{16} \cdot \frac{P}{d^4} \propto \frac{1}{16} \cdot P_{ring1}$$

According to Equation 2 and Equation 3, the interference strength from the second ring to the center cell is 1/16 the interference strength of the first ring. Evidently, the interferences between cells in a multi-cell structure largely come from the cells of the first ring.

In the above example, factors, such as fading, encountered in the everyday mobile communication environment were purposely excluded to describe the concept of interference strength reduction from the first ring to the second ring. For instance, occurrences of long-term fading which can be modeled as log-normal and short-term fading which can be modeled as either Rayleigh or Rician in a mobile communication system is common, but in the above example, these fading factors were not considered. However, even if fading was considered in the equation, similar result can be inferred.

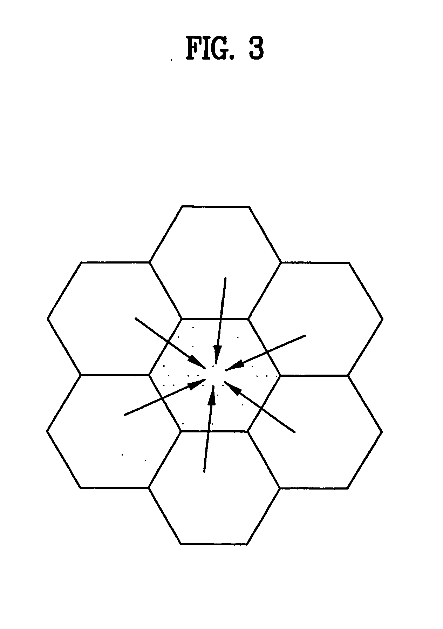

As discussed above, the interference from the first ring of cells has the most effect. Therefore, in further discussions of a multi-cell structure, a multi-cell structure having only a first ring of cells without the second ring will form the basis for discussion from this point forward. An example of this is illustrated in Figure 3.

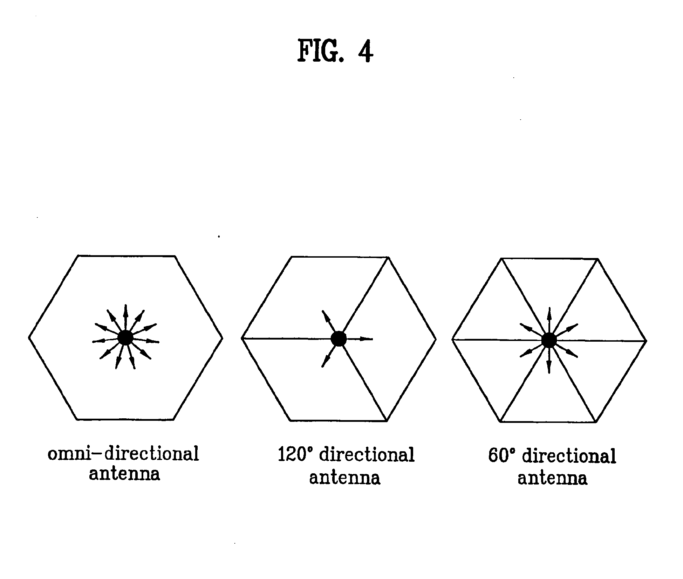

Figures 2 and 3 are illustrations of a cell structure using omni-directional antennas. However, in a mobile communication system environment, directional antennas where a cell is divided into sectors are often used. More specifically, a cell using a 120° directional antenna has the cell partitioned into three sectors, and a 60° directional antenna has the cell divided into a cell having six sectors. Figure 4 illustrates different types of directional antennas with corresponding sector structures.

When the concept of dividing a cell into sectors is applied to a cell structure, the manner in which a cell interferes with other cells changes. Directional antennas can be used to construct sectors in a cell. Moreover, interferences among sectors in a cell do not occur since the sectors are sectioned off evenly so as to prevent overlapping of each other. For example, since the 120° directional antenna of Figure 4 has three sectors all facing different directions, the data streams are separately transmitted from each sector without affecting transmission of other sectors. In other words, each transmission of data streams does not physically interfere with each other. In the same vein, there is no interference among six sectors in a cell using the 60° directional antenna of Figure 4.

By using sectors, each sector can share the same frequency bandwidth since interference does not take place among sectors in a cell. Accordingly, the frequency can be used more effectively. Furthermore, the frequency usage efficiency can increase up to threefold in a cell using a 120° directional antenna and up to six times in a cell using a 60° directional antenna, theoretically. In short, by using directional antennas, efficiency of using the frequency is increased.

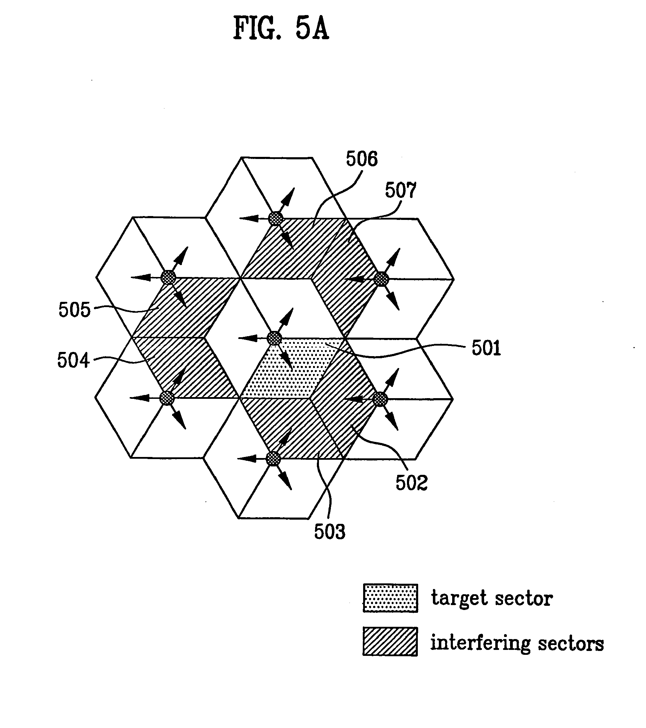

Usually, sectors have effect on interferences that occur in a cell and also on interferences that take place between cells. In Figure 3, a group of neighboring cells (first ring) that causes most interference on a specific cell, also referred to as target cell, is provided. Similarly, Figure 5a shows an example of a group of neighboring cells (first ring) that cause most interference on a specific or target cell is provided.

In Figure 5a, each cell has three sectors which is constructed from a 120° directional antenna. Since each sector employs a 120° directional antenna, the direction of transmission is limited to 120°. The arrows presented in each cell show the transmission directions from each sector. In this figure, sector 501 is the target sector. From the neighboring cells, the transmissions from interfering sectors 502-507 generate interference on the target sector 501 as indicated by the directions of the transmissions. The other sectors of other cells do not generate interference or the interference is considered negligible since the directions of the transmissions are different.

Generally, interferences become a problem near the borders of the cells. The reason for this problem is that the strength of transmission signal is affected by distance (See Equation 1). As the transmission signal travels to the border of a cell or sector, the strength of the transmission signal weakens due to distance. Consequently, even a small amount of interference can affect the transmission near the border.

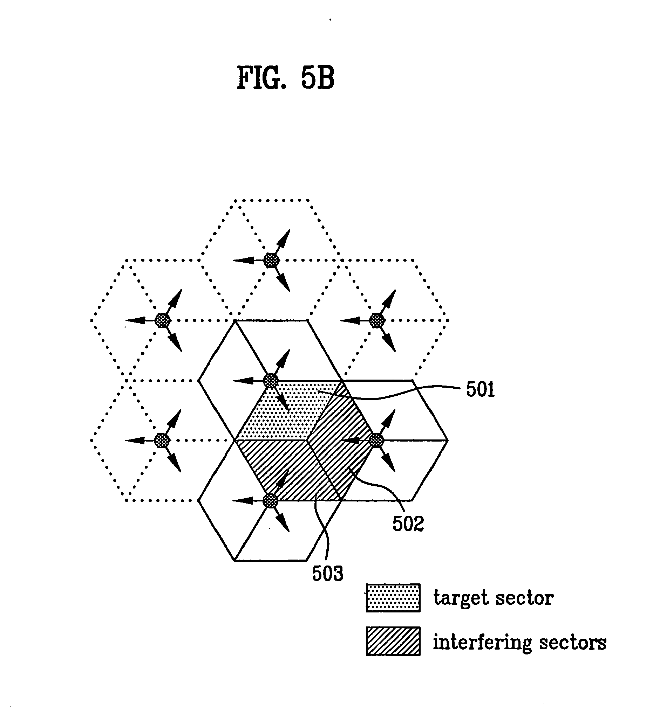

Because the transmissions near the border are most susceptible to interference, the target sector 501 is susceptible to most interference near the border of neighboring interfering sectors 502 and 503. Accordingly, Figure 5b illustrates two interfering sectors 502 and 503 which cause most interference to the target sector 501.

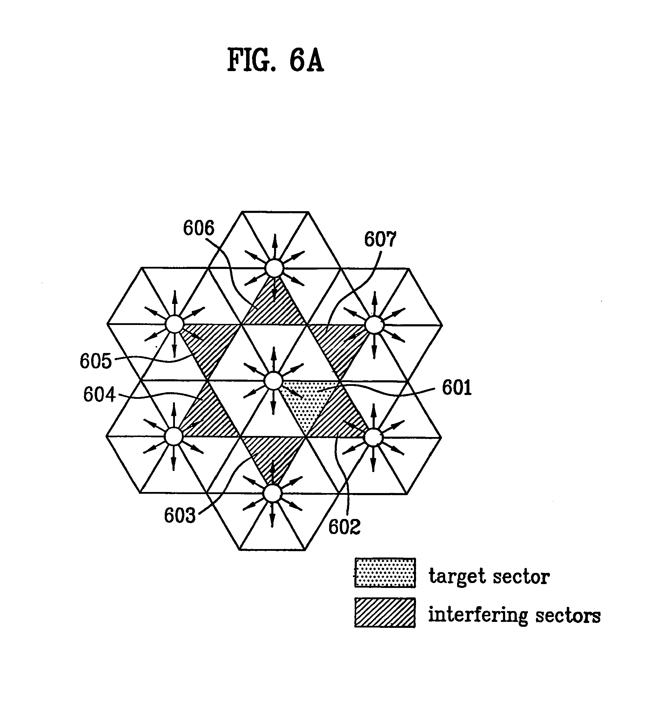

As another example, Figure 6a illustrates interference caused by neighboring cells in a 60° directional antenna cell. As discussed above, a 60° directional cell has six sectors with the direction of transmission being limited to 60° as indicated by the arrows in each sector of a cell. Here, the target sector 601 is affected by the interfering sectors 602-607. The other sections of other cells do not generate interference, and the interference is considered negligible since the directions of the transmissions are different.

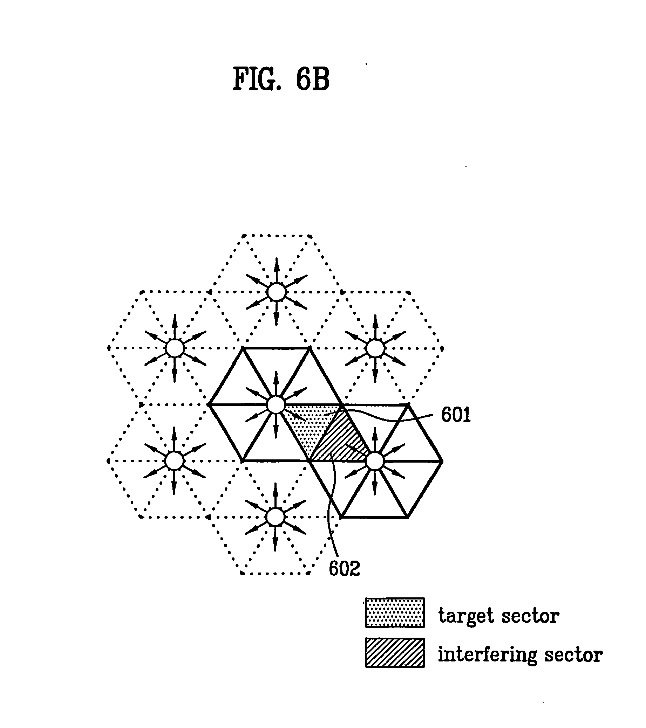

Again, considering the discussion of above that the transmission near the border are most susceptible to interference, Figure 6b illustrates an interfering sector 602 which cause most interference to the target sector 601.

In OFDM system, methods have been introduced to reduce inter-cell interference including Frequency Hopping (FH) and Dynamic Channel Allocation (DCA). FH employs a technique where a subcarrier hops between available frequencies in a cell or a sector randomly at different times. In other words, subcarriers, from each side of the borders of a cell or sector where the interference is the greatest, use different bandwidths. Here, the hopping of subcarriers are planned so that the subcarriers used by the cells or sectors experiencing the strongest interference do not overlap or interfere with each other probabilistically as possible. Furthermore, interference is reduced when all of the subcarriers are not fully utilized. However, when the subcarriers are fully utilized, the interferences cannot be reduced.

DCA employs a technique where a cell or sector determines the strength of Signal to Interference Noise Ratio (SINR) of each subcarrier and transmits signal based on the highest SINR. In other words, a base station transmits signals using subcarriers based on channels having the best status. Such a technique attempts to reduce transmission power, in effect reducing interference caused by high power output. However, DCA does not directly reduce inter-cell interference and has to receive feedback signal in order to determine the SINR.

In a mobile communication system environment where OFDM is applied, subcarriers are allocated between base station and user equipment to allow for successful transmission. To accomplish this, the channel status of each subcarrier is determined and transmission power is appropriately allocated, accordingly. For instance, if a subcarrier is transmitted via a channel having poor channel status, higher transmission power is allocated to compensate for the poor channel status. With such compensation, Quality of Service (QOS) can be satisfied by maintaining a constant Bit Error Rate (BER) or Frame Error Rate (FER) in the communication system.

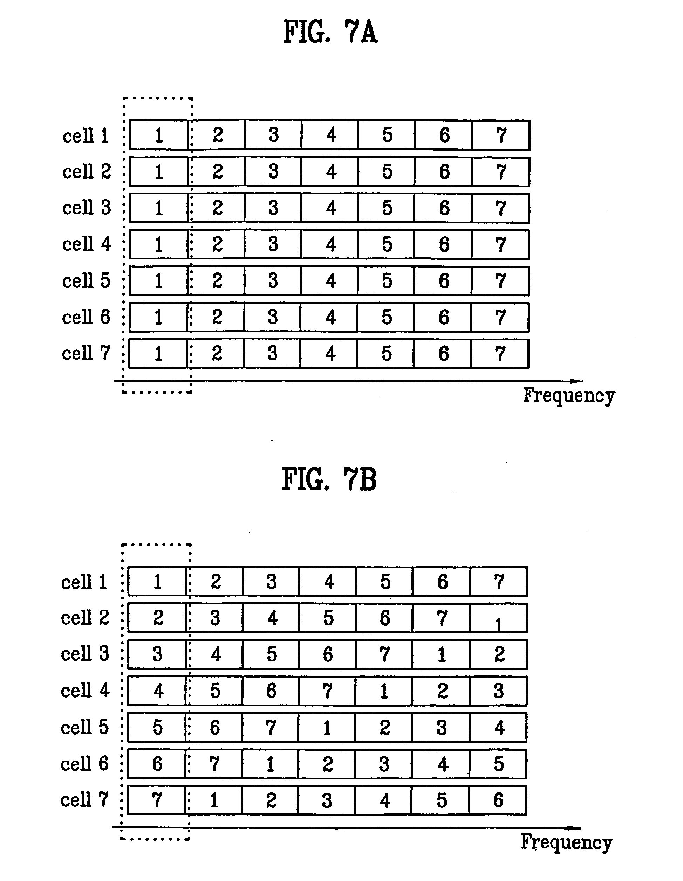

As discussed above, Figure 3 illustrates the effect of interference of surrounding cells in the mobile communication system using omni-directional antenna. Using the illustration of Figure 3 as an example, there are total of seven cells shown including one target cell in the center and six interfering cells surrounding the target cell. Here, the subcarriers of each cell are allocated to a subcarrier subset or a subcarrier group. In this case, there are seven subcarrier subsets. As discussed above, the reason for having seven subcarrier subets is because these seven cause most inter-cell interference between each other. Thereafter, each subcarrier subset is assigned a priority. Under the assumption that all seven cells share the same bandwidth, if the subcarriers of each cell are allocated without an allocation rule or a systematic method, the communication system would likely encounter problems. Figure 7A is an illustration of subcarriers allocated without an allocation rule.

As shown in Figure 7A, without an allocation rule, the subcarrier subsets having the same priorities of each cell are arranged at the same subcarrier subsets. Here, all the subcarriers having priority 1 are in the first subcarrier subset. The problem with such an arrangement is that if the subcarriers having priority 1 are allocated to the user equipments located near the cell borders, strong transmission power is demanded. Since all the subcarriers having priority 1 of each cell are positioned in the same subcarrier subset, all cells are transmitting its strongest signals, thus increasing the likelihood of interference between cells.

To reduce interferences between neighboring cells, an effective subcarrier allocation can be employed. For example, a determination is made as to a total number of subcarriers needed in each cell for allocation to each user equipment, and then the number of subcarrier subsets for each cell based on the total number subcarriers is determined. Here, the number of subcarrier subsets allocated in a cell can exceed the number of cells. In Figure 7B, the subcarriers of the system are allocated to the subcarrier subsets. The each subcarrier subset is then assigned a priority. The subcarrier subsets of each cell are independently allocated so as to minimize inter-cell interference of each cell with other neighboring cells. More specifically, the subsets of each cell are arranged in such an order based on the assigned priorities that no arrangement or order of the subsets of each cell is the same. In other words, the order to the subsets in one cell is different from the orders of subsets from all other cells. In addition, the subcarriers of each subcarrier subsets are allocated to each user equipment. Here, the subcarrier subsets of different cells having the same priority should not overlap with each other in order to minimize interference between subcarriers. By arranging the subsets in such an order where no subset having the same priority match, interferences between cells can be minimized.

For example, in a communication system using omni-directional antenna, the subcarriers are allocated to one of seven groups or subsets. The subsets are then assigned priorities ranging from 1 - 7. Based on the assigned priorities, the subcarriers of each subcarrier subsets having assigned priorities are allocated to each user equipment. Since the user equipments located near the cell border require stronger transmission power than those closer to the base station, the subcarriers of the subcarrier subset having priority 1 are assigned to these user equipment located in the periphery of the cell. On the contrary, the user equipments closest to the base station are allocated to the subcarriers of the subcarrier subset having priority 7 since these user equipments would demand the least amount of transmission power. Each cell allocates the subcarriers in the same manner. Here, in order to prevent the subcarrier subsets having same priorities causing interference to each other, as is the case in Figure 7A, the subcarrier subsets of each cell are arranged in a manner where the priorities of each cell at the same subcarrier subset are different. Such a strategic arrangement or allocation of subcarrier subsets helps to prevent concentration of same priority subsets in the same subcarrier subset and helps reduce interference in subcarriers among cells.

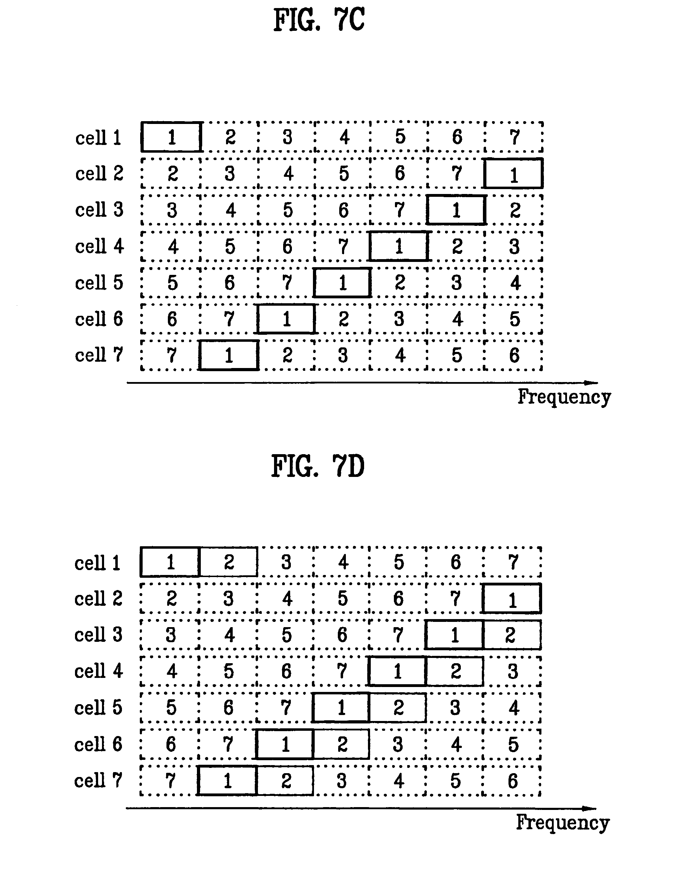

In situations where only a specific amount of the subcarrier capacity is demanded, inter-cell interferences could be reduced. Figure 7C is an example using 1/7 of total subcarrier capacity. In such a case, the problem of interference is eliminated. The process of allocating the subcarriers of the system to subcarrier subsets and assigning priorities, as explained with respect to Figure 7B, is the same. Since only 1/7 capacity is demanded, the process of allocating subcarriers of a subcarrier subset to user equipment differs from Figure 7B. Here, the subcarriers from a single subcarrier subset are allocated to each user equipment. In this situation, the locations of the user equipments are less important since all the user equipments are allocated the subcarriers having the same priority. Then the cells are arranged so that the subcarrier subsets of each cell having the same priority do not overlap with another, thus eliminating interference between each cell.

For example, after subcarriers are allocated to seven subcarrier subsets and assigned priorities starting from priority 1-7. Since only 1/7 subcarrier capacity is used, the subcarriers of subcarrier subset having priority 1 are allocated to the user equipments in each cell. Here, all the user equipments in each cell belong to subcarrier subset having priority 1. Each cell is then arranged in such a manner where each subcarrier subset having priority 1 is in different order or position from subcarrier subset having priority 1 of other cells. With a non-overlapping arrangement of subcarrier subsets, subcarrier subsets having priority 1 do not overlap with each other, thus eliminating interference between cells.

Figure 7D is an example of using 2/7 of total subcarrier capacity. Similar to the example of Figure 7C, through a priority allocation, interferences between subcarriers can be minimized. Again, the process of allocating subcarriers of each cell to subcarrier subsets and assigning priorities is explained in Figures 7B and 7C. In this Figure, unlike Figure 7C, 2/7 subcarrier capacity is used. Therefore, the subcarriers of subcarrier subsets having priorities 1 and 2 are allocated to the user equipments. Hence, the user equipments are allocated subcarriers having either priority 1 or priority 2. Then the cells are arranged so that the subcarrier subsets having priorities 1 and 2 are least conflicted with other cells. Consequently, the interferences betweens cells are minimized.

In addition, in the example of Figure 7D, in order to reduce the inter-cell interference more effectively, another scheme can be applied. More specifically, the user equipments requiring high transmitting power are allocated to subcarrier subsets having priority 1, and the user equipments requiring low transmitting power are allocated to subcarrier subsets having priority 2. Here, the difference in priorities indicates the distance of the user equipments from the center of the cell. That is, an user equipment near the center of the cell is assigned a low priority since it demands low transmitting power compared to an user equipment located near the cell boundary which demands high transmitting power, thus is assigned a high priority. Therefore, even if the physically same subcarrier subsets are used by different cells, based on the assigned priorities, i.e., UE having priority 1 in one cell and UE having priority 2 in another cell, interference is minimized due to the strengths of transmission powers according to their proximities from the center of the cell.

The reason for such allocation is that even when the same subcarrier subsets are used by different cells, two user equipments in different cells require different transmitting power so as to most likely be separated geometrically.

With respect to the examples of above, the communication system can demand not only 1/7 or 2/7 of total subcarrier capacity, but also up to full capacity which is illustrated in Figure 7B.

The allocation of subcarriers process of above with respect to Figure 7B can also be applied to a communication system having sectors. A cell in a communication system can be sectioned into a cell having a plurality of sectors, e.g., three or six sectors, based on the type of directional antennas employed.

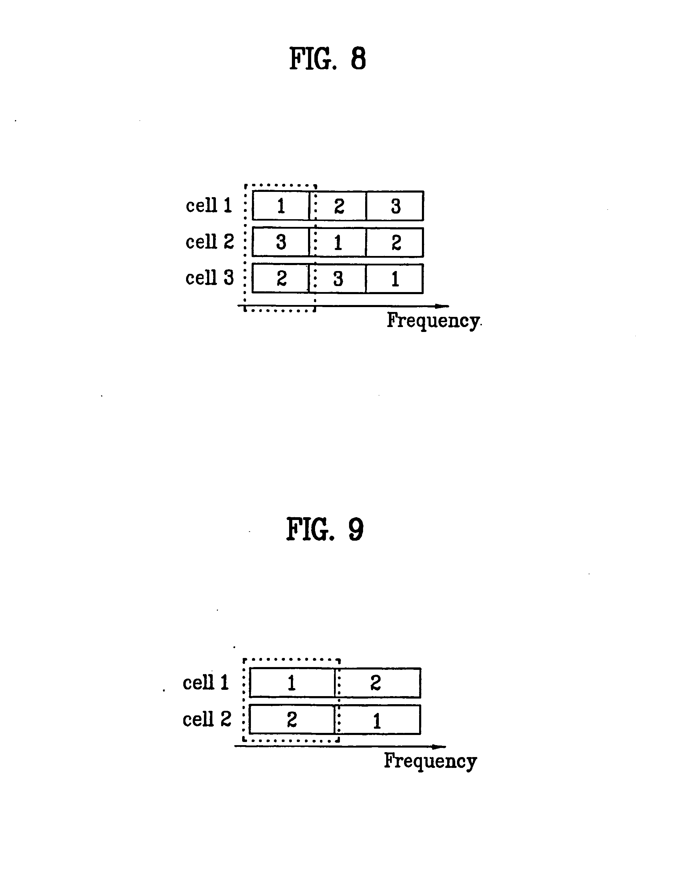

In a cell having three sectors by using a 120° directional antenna, as shown in Figure 5B, the subcarriers of each sector (or cell) are allocated to subcarrier subsets. Here, the number of subcarrier subsets allocated in a sector can exceed the number of sectors. The subcarrier subsets are then assigned priorities. Based on the subcarrier subset priorities of each sector (or cell), the cells are arranged. As illustrated in Figure 8, the cells are arranged so that the priorities of each cell do not overlap or correspond with another cell at the same subcarrier subset. In Figure 8, for example, the arrangement is such that at the first subcarrier subset, the priorities are 1 for cell 1, 3 for cell 2, and 2 for cell 3. In other words, the priorities at the same subcarrier subset are different and do not overlap with other sectors (or cells).

As for a cell having six sectors, a 60° directional antenna is used, as shown in Figure 6B, the subcarriers of each sector (or cell) are allocated to subcarrier subsets. Here, the number of subcarrier subsets allocated in a sector can exceed the number of sectors. The subcarrier subsets are then assigned priorities. Based on the subcarrier subset priorities of each sector (or cell), the cells are arranged. As illustrated in Figure 9, the subcarrier subsets having assigned priorities are allocated in a manner in which two sectors (one target sector and one interfering sector) to not overlap. For example, the arrangement is such that at the first subcarrier subset, the priorities are 1 for cell 1 and 2 for cell 2. In other words, the priorities at the same subcarrier subset are different and do not overlap with each other.

The allocation of subcarriers to the user equipments can be accomplished using various techniques. These techniques include a base station that receives no, partial or entire feedback information on the status of a channel on each user equipment. In a technique that receives no feedback, for example, the subcarriers is allocated in no particular order or based on a scheduler algorithm of the existing system. In a technique that receives partial feedback information on the status of each channel, a subcarrier is allocated to an user equipment demanding high/low values in Modulation and Coding Scheme, transmitting poor/good Channel Quality Indicator, or demanding low/high transmission power. Lastly, in a technique that receives feedback information on the status of each channel, the feedback information include information on optimum subcarrier capacity of an user equipment when compared to all of the used subcarriers in a cell.

The allocation of subcarriers in Figures 7B, 7C, and 7D are not limited to the examples of above, and different allocation rules or methods can also be used. Additionally, the techniques used in allocating subcarriers of the subcarrier subset to the user equipments are not limited to the examples of above and other techniques can be used.

It will be apparent to those skilled in the art that various modifications and variations can be made in the present invention provided they come within the scope of the appended claims.

**Claims**

1. A method of allocating a plurality of subcarriers of a mobile communication system in a plurality of cells using Orthogonal Frequency Division Multiplexing, hereinafter referred to as OFDM, the method comprising:

    allocating the plurality of subcarriers of the system to at least two subcarrier groups for each cell;
    assigning priorities to the at least two subcarrier groups in each cell so that, at the same subcarrier group, priorities of each cell do not overlap or correspond to priorities of another cell of the plurality of cells; and
    independently allocating subcarriers of each of the at least two subcarrier groups of each cell to at least one user equipment, UE, in accordance with the priorities in a way that a subcarrier included in a subcarrier group having a higher priority is allocated to a user equipment which is closer to a boundary of a corresponding cell.

2. The method of claim 1, wherein the subcarrier allocation to the subcarrier group in each cell is based on receiving feedback information on channel status from user equipments.

3. The method of claim 2, wherein the feedback information includes information on a user equipment having the best channel status.

4. The method of claim 1, wherein the subcarrier allocation to the subcarrier group in each cell is based on receiving partial feedback information on channel status of user equipments.

5. The method of claim 4, wherein the partial feedback information includes information on data rates in Modulation and Coding Scheme (MCS) of the user equipments.

6. The method of claim 4, wherein the partial feedback information includes information on Channel Quality Indicator (CQI) of the user equipments.

7. The method of claim 4, wherein the partial feedback information includes information on amount of transmission power required by the user equipments.

8. The method of claim 1, wherein the priority assignment of each subcarrier group in the cell is based on signal strengths.

9. The method of claim 1, wherein the priority assignment of each subcarrier group in the cell is based on a distance between a base station and an user equipment.

**Patentansprüche**

1. Verfahren zum Zuweisen mehrerer Unterträger eines Mobilkommunikationssystems in mehreren Zellen unter Verwendung des orthogonalen Frequenzmultiplex, im Folgenden mit OFDM bezeichnet, wobei das Verfahren umfasst:

    Zuweisen der mehreren Unterträger des Systems zu wenigstens zwei Unterträgergruppen für jede Zelle;
    Zuordnen von Prioritäten zu den wenigstens zwei Unterträgergruppen in jeder Zelle, so dass in derselben Unterträgergruppe Prioritäten jeder Zelle nicht überlappen oder Prioritäten einer weiteren Zelle der mehreren Zellen entsprechen; und
    unabhängiges Zuweisen von Unterträgern jeder der wenigstens zwei Unterträgergruppen jeder Zelle zu wenigstens einem Anwendergerät, UE, in Übereinstimmung mit den Prioritäten, derart, dass ein in einer Unterträgergruppe mit höherer Priorität enthaltener Unterträger einem Anwendergerät zugewiesen wird, das sich näher bei einer Grenze einer entsprechenden Zelle befindet.

**2.** Verfahren nach Anspruch 1, wobei die Unterträgerzuweisung zu der Unterträgergruppe in jeder Zelle auf dem Empfang von Rückmeldungsinformationen bezüglich des Kanalstatus von Anwendergeräten beruht.

**3.** Verfahren nach Anspruch 2, wobei die Rückmeldungsinformationen Informationen über ein Anwendergerät, das den besten Kanalstatus besitzt, enthalten.

**4.** Verfahren nach Anspruch 1, wobei die Unterträgerzuweisung zu der Unterträgergruppe in jeder Zelle auf dem Empfang von Teilrückmeldungsinformationen über den Kanalstatus von Anwendergeräten beruht.

**5.** Verfahren nach Anspruch 4, wobei die Teilrückmeldungsinformationen Informationen über Datenraten im Modulations- und Codierungsschema (MCS) der Anwendergeräte enthalten.

**6.** Verfahren nach Anspruch 4, wobei die Teilrückmeldungsinformationen Informationen über einen Kanalqualitätsindikator (CQI) der Anwendergeräte enthalten.

**7.** Verfahren nach Anspruch 4, wobei die Teilrückmeldungsinformationen Informationen über den Betrag der Übertragungsleistung, die von den Anwendergeräten erfordert wird, enthalten.

**8.** Verfahren nach Anspruch 1, wobei die Prioritätszuordnung jeder Unterträgergruppe in der Zelle auf Signalstärken beruht.

**9.** Verfahren nach Anspruch 1, wobei die Prioritätszuordnung jeder Unterträgergruppe in der Zelle auf einem Abstand zwischen einer Basisstation und einem Anwendergerät beruht.

**Revendications**

**1.** Procédé pour attribuer une pluralité de sous-porteuses d'un système de communication mobile dans une pluralité de cellules utilisant un Multiplexage à Division de Fréquences Orthogonales, désigné ci-après par MDFO, le procédé comprenant les étapes consistant à :

allouer la pluralité de sous-porteuses du système à au moins deux groupes de sous-porteuses pour chaque cellule ;
attribuer des priorités auxdits au moins deux groupes de sous-porteuses dans chaque cellule de telle façon que, au niveau du même groupe de sous-porteuses, les priorités de chaque cellule ne se chevauchent pas ou ne correspondent pas à des priorités d'une autre cellule de la pluralité de cellules ; et
allouer indépendamment des sous-porteuses de chacun desdits au moins deux groupes de sous-porteuses de chaque cellule à au moins un Équipement Utilisateur, dit "EU", en accord avec les priorités d'une manière telle qu'une sous-porteuse incluse dans un groupe de sous-porteuses ayant une priorité plus élevée est allouée à un équipement utilisateur qui est plus proche d'une frontière d'une cellule correspondante.

**2.** Procédé selon la revendication 1, dans lequel l'allocation de sous-porteuses au groupe de sous-porteuses dans chaque cellule est basée sur la réception d'informations en retour concernant l'état du canal en provenance d'équipements utilisateurs.

**3.** Procédé selon la revendication 2, dans lequel les informations en retour incluent des informations sur un équipement utilisateur ayant le meilleur état de canal.

**4.** Procédé selon la revendication 1, dans lequel l'allocation de sous-porteuses au groupe de sous-porteuses dans chaque cellule est basée sur la réception d'informations en retour partielles sur l'état du canal des équipements utilisateurs.

**5.** Procédé selon la revendication 4, dans lequel les informations en retour partielles incluent des informations sur des débits de données dans un Schéma de Modulation et de Codage (SMC) des équipements utilisateurs.

**6.** Procédé selon la revendication 4, dans lequel les informations en retour partielles incluent des informations sur l'Indicateur de Qualité de Canal (IQC) des équipements utilisateurs.

**7.** Procédé selon la revendication 4, dans lequel les informations en retour partielles incluent des informations sur l'intensité de puissance de transmission requise par les équipements utilisateurs.

**8.** Procédé selon la revendication 1, dans lequel l'attribution de priorité de chaque groupe de sous-porteuses dans la cellule est basée sur les intensités des signaux.

**9.** Procédé selon la revendication 1, dans lequel l'attribution de priorité de chaque groupe de sous-porteuses dans la cellule est basée sur une distance entre une station de base et un équipement utilisateur.

# FIG. 1

Orthogonal

Subcarriers

Frequency

# FIG. 2

# FIG. 3

# FIG. 4

omni-directional
antenna

120° directional
antenna

60° directional
antenna

# FIG. 5A

target sector

interfering sectors

# FIG. 5B

501

502

503

target sector

interfering sectors

# FIG. 6A

target sector

interfering sectors

# FIG. 6B

601

602

▨ target sector

▨ interfering sector

## FIG. 7A

| | | | | | | | |
|---|---|---|---|---|---|---|---|
| cell 1 | 1 | 2 | 3 | 4 | 5 | 6 | 7 |
| cell 2 | 1 | 2 | 3 | 4 | 5 | 6 | 7 |
| cell 3 | 1 | 2 | 3 | 4 | 5 | 6 | 7 |
| cell 4 | 1 | 2 | 3 | 4 | 5 | 6 | 7 |
| cell 5 | 1 | 2 | 3 | 4 | 5 | 6 | 7 |
| cell 6 | 1 | 2 | 3 | 4 | 5 | 6 | 7 |
| cell 7 | 1 | 2 | 3 | 4 | 5 | 6 | 7 |

Frequency

## FIG. 7B

| | | | | | | | |
|---|---|---|---|---|---|---|---|
| cell 1 | 1 | 2 | 3 | 4 | 5 | 6 | 7 |
| cell 2 | 2 | 3 | 4 | 5 | 6 | 7 | 1 |
| cell 3 | 3 | 4 | 5 | 6 | 7 | 1 | 2 |
| cell 4 | 4 | 5 | 6 | 7 | 1 | 2 | 3 |
| cell 5 | 5 | 6 | 7 | 1 | 2 | 3 | 4 |
| cell 6 | 6 | 7 | 1 | 2 | 3 | 4 | 5 |
| cell 7 | 7 | 1 | 2 | 3 | 4 | 5 | 6 |

Frequency

# FIG. 7C

| | | | | | | | |
|---|---|---|---|---|---|---|---|
| cell 1 | **1** | 2 | 3 | 4 | 5 | 6 | 7 |
| cell 2 | 2 | 3 | 4 | 5 | 6 | 7 | **1** |
| cell 3 | 3 | 4 | 5 | 6 | 7 | **1** | 2 |
| cell 4 | 4 | 5 | 6 | 7 | **1** | 2 | 3 |
| cell 5 | 5 | 6 | 7 | **1** | 2 | 3 | 4 |
| cell 6 | 6 | 7 | **1** | 2 | 3 | 4 | 5 |
| cell 7 | 7 | **1** | 2 | 3 | 4 | 5 | 6 |

Frequency

# FIG. 7D

| | | | | | | | |
|---|---|---|---|---|---|---|---|
| cell 1 | **1** | **2** | 3 | 4 | 5 | 6 | 7 |
| cell 2 | 2 | 3 | 4 | 5 | 6 | 7 | **1** |
| cell 3 | 3 | 4 | 5 | 6 | 7 | **1** | **2** |
| cell 4 | 4 | 5 | 6 | 7 | **1** | **2** | 3 |
| cell 5 | 5 | 6 | 7 | **1** | **2** | 3 | 4 |
| cell 6 | 6 | 7 | **1** | **2** | 3 | 4 | 5 |
| cell 7 | 7 | **1** | **2** | 3 | 4 | 5 | 6 |

Frequency

# FIG. 8

# FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03045081 A1
- WO 02049385 A2
- EP 1178641 A1